# EUROPEAN PATENT APPLICATION

(11) **EP 4 838 689 A1**
(43) Date of publication of application: **11.11.2026**
(21) Application number: 24923517.7
(22) Date of filing: 11.12.2024
(51) Int. Cl.: H01M 50/593, H01M 50/30

(54) **BATTERY CELL, BATTERY, AND ELECTRICAL APPARATUS**

(30) Priority: 07.02.2024 CN 202420287894 U
(71) Applicant: Contemporary Amperex Technology Co., Limited, Ningde, Fujian 352100 (CN)
(72) Inventor: WU, Kai, Ningde, Fujian 352100 (CN); QUAN, Chao, Ningde, Fujian 352100 (CN); LI, Yao, Ningde, Fujian 352100 (CN); LI, Wei, Ningde, Fujian 352100 (CN)
(74) Representative: Lorenz Seidler Gossel Part. mbB
(86) International application number: PCT/CN2024/138405
(87) International publication number: WO 2025/167315

(57) **Abstract**

A battery cell (20), a battery (100), and an electrical apparatus (1000). The battery cell (20) comprises a housing, an electrode assembly (23), and an insulating protection member (30). The housing has a first wall (201) and a pressure relief structure (212), provided on the first wall (201). The electrode assembly (23) is disposed in the housing. The insulating protection member (30) is disposed at a side of the first wall (201) facing the electrode assembly (23), and the insulating protection member (30) has a gas release structure (32) corresponding to the position of the pressure relief structure (212). The gas release structure (32) comprises multiple layers of flow guide plates (323). Each layer of flow guide plate (323) being provided with a flow guide hole (322), the multiple layers of flow guide plates (323) being disposed at intervals along a first direction (X), projections of the flow guide holes (322) of at least two layers of flow guide plates (323) along the first direction (X) being at least partially staggered, and the first direction (X) being a direction of the first wall facing the electrode assembly (23). By means of disposing the flow guide holes (322) of any two adjacent layers of flow guide plates (323) in a staggered manner along the first direction (X), the effect of stopping a molten substance or other high-temperature particles of the pressure relief structure (212) can be improved, and the possibility of thermal runaway of the current battery cell (20) is reduced.

## Description

### CROSS-REFERENCE TO RELATED APPLICATIONS

This application claims priority to the Chinese Patent Application No. 202420287894.6 filed on February 7, 2024 and entitled "BATTERY CELL, BATTERY, AND ELECTRICAL APPARATUS", which is incorporated herein by reference in its entirety.

### TECHNICAL FIELD

This application relates to the technical field of batteries, and in particular, to a battery cell, a battery, and an electric apparatus.

### BACKGROUND

This section provides only background information related to this application, which is not necessarily prior art.

Batteries store electric energy and are widely used in electronic devices, such as mobile phones, notebook computers, electric bicycles, electric automobiles, electric airplanes, electric ships, electric toy cars, electric toy ships, electric toy airplanes, and electric tools.

When a battery experiences external short circuit, overcharge, nail penetration, plate impact, and the like, thermal runaway is prone to occur. When thermal runaway is severe, there is even a risk of explosion. Alleviating propagation of thermal runaway of a battery is an unignorable subject in the development of battery technologies.

### SUMMARY

In view of the above problems, this application provides a battery cell, a battery, and an electric apparatus, to reduce a risk that a battery cell undergoing thermal runaway causes thermal runaway of an adjacent battery cell, thereby reducing a possibility of thermal runaway propagation.

According to a first aspect of this application, a battery cell is provided, including a housing, an electrode assembly, and an insulating protection member; the housing includes a first wall, where the first wall is provided with a pressure relief structure; the electrode assembly is provided in the housing; and the insulating protection member is provided on a side of the first wall facing the electrode assembly, where the insulating protection member is provided with an exhaust structure corresponding to a position of the pressure relief structure, the exhaust structure includes multiple layers of flow guide plates, each layer of flow guide plate is provided with a flow guide hole, the multiple layers of flow guide plates are spaced apart along a first direction, projections of flow guide holes of at least two layers of flow guide plates are at least partially staggered along the first direction, and the first direction is an arrangement direction of the first wall and the electrode assembly.

In the technical solution of the embodiments of this application, the exhaust structure includes multiple layers of flow guide plates spaced apart. Each layer of flow guide plate is provided with a flow guide hole. When thermal runaway occurs in the current battery cell, the flow guide hole implements conduction, and then high-temperature smoke, particulate matter, and other emissions inside the current battery cell reach the pressure relief structure relatively smoothly and are discharged to the outside of the battery cell through the pressure relief structure, so that the battery cell relieves pressure in a timely manner, thereby reducing the risk caused by thermal runaway of the current battery cell. When thermal runaway occurs in another battery cell adjacent to the current battery cell, the emissions ejected from the battery cell undergoing thermal runaway may affect a pressure relief structure of the current battery cell and cause the pressure relief structure of the current battery cell to melt. In this case, since the projections of the flow guide holes of at least two layers of flow guide plates among the multiple layers of flow guide plates along the first direction are at least partially staggered, the molten substance of the pressure relief structure, other high-temperature particulate matter, or the like is blocked by a lower flow guide plate after passing through a flow guide hole of an upper flow guide plate, thereby reducing the possibility that the molten substance of the pressure relief structure or other high-temperature particulate matter directly passes through the exhaust structure and falls onto the electrode assembly, which may cause a short circuit in the current battery cell and further cause thermal runaway of the current battery cell. In this way, the possibility of further propagation of thermal runaway is reduced and the possibility of greater danger caused by thermal runaway is reduced.

In some embodiments of this application, projections of flow guide holes of any two adjacent layers of flow guide plates among the multiple layers of flow guide plates along the first direction are at least partially staggered. In this embodiment, by staggering the flow guide holes of any two adjacent layers of flow guide plates along the first direction, the blocking effect on the molten substance of the pressure relief structure or other high-temperature particulate matter is improved, thereby reducing the possibility that the molten substance of the pressure relief structure or other high-temperature particulate matter directly passes through the exhaust structure and falls onto the electrode assembly, which may cause a short circuit in the current battery cell and further cause thermal runaway of the current battery cell. In this way, the possibility of further propagation of thermal runaway is reduced and the possibility of greater danger caused by thermal runaway is reduced.

In some embodiments of this application, projections of flow guide holes of any two layers of flow guide plates among the multiple layers of flow guide plates along the first direction are at least partially staggered. In these embodiments, by staggering the flow guide holes of all the flow guide plates, the molten substance of the pressure relief structure or other high-temperature particulate matter is blocked by multiple lower flow guide plates after falling through a flow guide hole of an uppermost layer. Even after the flow guide plate adjacent to the uppermost flow guide plate is melted, the lower flow guide plate still has a good blocking effect, thereby improving the blocking effect on the molten substance of the pressure relief structure or other high-temperature particulate matter, reducing the possibility that the molten substance of the pressure relief structure or other high-temperature particulate matter directly passes through the exhaust structure and falls onto the electrode assembly, which may cause a short circuit in the current battery cell and further cause thermal runaway of the current battery cell.

In some embodiments of this application, at least one layer of flow guide plate is provided with multiple flow guide holes spaced apart. The multiple flow guide holes are spaced apart on the flow guide plate. In this way, an overall flow area of the flow guide plate is satisfied, which facilitates discharge of the emissions inside the battery cell through the flow guide holes during thermal runaway of the battery cell. In addition, the multiple flow guide holes are provided. Compared with one large flow guide hole, a single flow guide hole has a smaller flow area, which blocks high-temperature particulate matter with a large particle size. This helps improve the blocking effect on the molten substance of the pressure relief structure or other high-temperature particulate matter, thereby reducing the possibility that the molten substance of the pressure relief structure or other high-temperature particulate matter directly passes through the exhaust structure and falls onto the electrode assembly, which may cause a short circuit in the current battery cell and further cause thermal runaway of the current battery cell.

In some embodiments of this application, the multiple flow guide holes located on a same layer of flow guide plate are arranged in rows, and each row includes multiple flow guide holes spaced apart along a second direction, where the second direction intersects with the first direction. The multiple flow guide holes are arranged in rows. In this way, to stagger flow guide holes of different layers of flow guide plates, it is only necessary to stagger each row of flow guide holes of adjacent flow guide plates, which simplifies the design of the multiple layers of flow guide plates.

In some embodiments of this application, multiple flow guide holes located on a same layer of flow guide plate are arranged in multiple rows along a third direction, and two adjacent flow guide holes in adjacent rows are aligned in the third direction, where the third direction, the second direction, and the first direction intersect with each other. Each layer of flow guide plate is provided with multiple rows of flow guide holes. In this way, an area of the flow guide plate is appropriately utilized, and both a flow area and a support strength of the exhaust structure are ensured.

In some embodiments of this application, the insulating protection member further includes a body, the body is provided with an exhaust port, both the pressure relief structure and the exhaust structure correspond to a position of the exhaust port, and the exhaust structure is provided on a side of the body facing away from the pressure relief structure. The pressure relief structure and the exhaust structure are provided opposite to each other through the exhaust port, so that the exhaust structure and the pressure relief structure are spaced apart. In this way, smoke and other emissions inside the battery cell relatively smoothly flow to the pressure relief structure after passing through the exhaust structure. This enhances responsiveness of opening the pressure relief structure and reduces the possibility that the battery cell cannot relieve pressure in a timely manner, which may pose a risk of more severe thermal runaway.

In some embodiments of this application, the exhaust structure further includes a support wall, one end of the support wall is connected to the body, another end of the support wall protrudes toward a side of the body facing away from the first wall, and the flow guide plates are connected to the support wall. The support wall is provided, and the support wall protrudes relative to the body, providing space along the first direction for the arrangement of the multiple layers of flow guide plates, which facilitates the spaced arrangement of the multiple layers of flow guide plates. Further, this helps the bottommost flow guide plate abut against the electrode assembly, which helps enhance support provided by the insulating protection member to the electrode assembly and reduce the possibility that the electrode assembly vibrates or shakes in the housing, so that the electrode assembly is more stable in the housing.

In some embodiments of this application, the exhaust structure and the body are integrated.

In some embodiments of this application, the housing includes a shell and an end cover, the shell is provided with an opening, the end cover covers the opening, and the first wall is the end cover.

In some embodiments of this application, the insulating protection member is a plastic member.

In some embodiments of this application, along the first direction, a flow guide plate closest to the pressure relief structure is spaced apart from the first wall; and/or along the first direction, a flow guide plate farthest from the first wall abuts against the electrode assembly. The flow guide plate closest to the first wall is spaced apart from the first wall. In this case, there is a gap between the pressure relief structure and the exhaust structure. When the pressure relief structure melts, it is less likely to block a flow guide hole on the flow guide plate closest to the first wall, so that smoke and other emissions inside the battery cell may relatively smoothly flow out through the exhaust structure. This enhances responsiveness of pressure relief in the battery cell and reduces the possibility that the battery cell poses a risk of more severe thermal runaway. The flow guide plate farthest from the first wall may abut against the top surface of the main part of the electrode assembly to limit the movement of the electrode assembly along the first direction, enhance support provided by the insulating protection member to the electrode assembly, and reduce the possibility that the electrode assembly vibrates or shakes in the housing, so that the electrode assembly is relatively stable in the housing.

In some embodiments of this application, a side of the first wall facing away from the battery cell is provided with a protective member, the protective member is provided with a shielding portion corresponding to the position of the pressure relief structure, and the shielding portion covers the pressure relief structure. The protective member may provide protection from the outside of the first wall. When thermal runaway occurs in another battery cell adjacent to the current battery cell, the emissions ejected from the battery cell undergoing thermal runaway are blocked by the protective member, which reduces the influence of the emissions from the another battery cell on the pressure relief structure, so that the possibility of further propagation of thermal runaway is reduced and the possibility of greater danger caused by thermal runaway is reduced. In this embodiment, based on the exhaust structure of this application or any embodiment of this application, a protective member may be further provided. In this way, the exhaust structure on the inner side of the first wall and the protective member on the outer side of the first wall form multi-level protection inside and outside the battery cell, further reducing the possibility of thermal runaway propagation and the possibility of greater danger caused by thermal runaway.

In some embodiments of this application, a total flow area of all flow guide holes on each layer of flow guide plate is 0.5 times to 1.2 times a pressure relief area of the pressure relief structure. For setting of the total flow area of the flow guide holes of each layer of flow guide plate, both the strength and the flow area of the flow guide plate are considered, so that the insulating protection member provides good support to the battery cell, and the emissions inside the battery cell flows to the pressure relief structure in a relatively timely manner.

According to a second aspect of this application, a battery is provided, including the battery cell provided in this application or any embodiment of this application.

According to a third aspect of this application, an electric apparatus is provided, including the battery provided in this application or any embodiment of this application. The battery is configured to provide electric energy.

The above description is only an overview of the technical solutions of this application. To more clearly understand the technical means of this application, the technical means may be implemented in accordance with the content of the description. To make the above and other objects, features, and advantages of this application more obvious and easier to understand, the specific embodiments of this application are specifically listed below.

### BRIEF DESCRIPTION OF DRAWINGS

By reading the detailed description of the preferred embodiments below, various other advantages and benefits will become clear to those of ordinary skill in the art. The drawings are only used for the purpose of showing the preferred embodiments and are not considered to be limitations on this application. Moreover, the same components are denoted by the same reference signs throughout the drawings. In the drawings:
FIG. 1 schematically shows a schematic structural diagram of a vehicle provided in some embodiments of this application;
FIG. 2 schematically shows a schematic exploded view of a battery provided in some embodiments of this application;
FIG. 3 schematically shows a schematic exploded view of a battery cell provided in some embodiments of this application;
FIG. 4 schematically shows a schematic diagram of an insulating protection member from a perspective in some embodiments of this application;
FIG. 5 schematically shows a schematic diagram of an insulating protection member from another perspective in some embodiments of this application;
FIG. 6 schematically shows a cross-sectional view along A-A of FIG. 5;
FIG. 7 schematically shows a cross-sectional view along B-B of FIG. 5;
FIG. 8 schematically shows a schematic diagram of an insulating protection member from a perspective in some embodiments of this application;
FIG. 9 schematically shows a schematic diagram of an insulating protection member from another perspective in some embodiments of this application;
FIG. 10 schematically shows a cross-sectional view along C-C of FIG. 9;
FIG. 11 schematically shows a cross-sectional view along D-D of FIG. 9; and
FIG. 12 schematically shows a schematic exploded view of an end cover and a protective member in some embodiments of this application.

The reference signs in the drawings for the specific embodiments are as follows:
1000. vehicle; 100. battery; 10. case; 11. first part; 12. second part; 20. battery cell; 201. first wall; 21. end cover; 211. electrode terminal; 212. pressure relief structure; 213. pressure relief region; 22. shell; 23. electrode assembly; 231. tab; 232. main part; 24. connecting piece; 25. insulating sheet; 30. insulating protection member; 31. body; 311. exhaust port; 32. exhaust structure; 321. support wall; 322. flow guide hole; 323. flow guide plate; 324. first flow guide plate; 325. second flow guide plate; 33. protruding portion; 40. protective member; 41. shielding portion; 42. connecting portion; 43. weakened portion; 200. controller; 300. motor; X. first direction; Y. second direction; and Z. third direction.

### DESCRIPTION OF EMBODIMENTS

The embodiments of the technical solutions of this application will be described in detail below with reference to the drawings. The following embodiments are only used to more clearly illustrate the technical solutions of this application, and are therefore only used as examples and cannot be used to limit the protection scope of this application.

Unless otherwise defined, all technical and scientific terms used herein have the same meaning as those generally understood by those skilled in the art to which this application pertains; the terms used herein are only for the purpose of describing specific embodiments and are not intended to limit this application; the terms "include" and "have" and any variations thereof in the description and claims of this application and the above drawings are intended to cover non-exclusive inclusion.

In the description of the embodiments of this application, the technical terms "first", "second", and the like are only used to distinguish different objects and cannot be understood as indication or implication of relative importance or implicit indication of a quantity, specific order, or priority relationship of the indicated technical features. In the description of the embodiments of this application, "multiple" means two or more, unless otherwise clearly and specifically limited.

The reference to "embodiment" herein means that a specific feature, structure, or characteristic described with reference to the embodiment may be included in at least one embodiment of this application. The appearance of the phrase in various positions in the description does not necessarily refer to the same embodiment, nor is it an independent or alternative embodiment that is mutually exclusive with other embodiments. It is explicitly and implicitly understood by those skilled in the art that the embodiments described herein may be combined with other embodiments.

In the description of the embodiments of this application, the term "and/or" is only a description of an association relationship of associated objects, indicating that three relationships may exist. For example, A and/or B may indicate three situations: A exists alone, both A and B exist, and B exists alone. In addition, the character "/" in this specification generally indicates that the associated objects are in an "or" relationship.

In the description of the embodiments of this application, the term "multiple" refers to two or more (including two), and similarly, "multiple groups" refers to two or more groups (including two groups), and "multiple sheets" refers to two or more sheets (including two sheets).

In the description of the embodiments of this application, the orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientations or positional relationships shown in the drawings. These terms are only for the convenience of describing the embodiments of this application and simplifying the description, and do not indicate or imply that the referred apparatus or element must have a specific orientation, or be constructed and operated in a specific orientation, and therefore cannot be understood as a limitation on the embodiments of this application.

In the description of the embodiments of this application, unless otherwise clearly specified and limited, the technical terms "mount", "connect", "join", "fasten", and the like should be understood in a broad sense. For example, it may be a fixed connection, a detachable connection, or an integral connection; it may be a mechanical connection or an electrical connection; it may be a direct connection or an indirect connection through an intermediate medium, and it may be the internal communication of two elements or the interaction relationship between two elements. For those of ordinary skill in the art, the specific meanings of the above terms in the embodiments of this application may be understood according to specific circumstances.

With the vigorous development of the new energy industry, battery capacities are becoming increasingly large, and the performance requirements for batteries are also growing higher and higher. A battery usually includes one or more battery cells. When a battery cell experiences external short circuit, overcharge, nail penetration, plate impact, and the like, thermal runaway is easily triggered. A pressure relief structure may be provided on the end cover of the battery cell to facilitate prompt discharge of high-temperature smoke, high-temperature particulate matter, and other emissions when the battery cell undergoes thermal runaway.

Specifically, in some technologies, an insulating protection member is arranged between the end cover of the battery cell and the electrode assembly. The insulating protection member is provided with an opening corresponding to the pressure relief structure. When the battery cell undergoes thermal runaway, the opening allows the emissions to smoothly reach the pressure relief structure from the electrode assembly, thereby allowing the pressure relief structure to actuate (the actuation of the pressure relief structure means that the pressure relief structure is opened and a relief channel is formed) to relieve pressure and reduce the extreme scenario of battery cell explosion.

The pressure relief structure is a weak structure of the battery cell. After thermal runaway occurs in one battery cell of the battery, the ejected high-temperature gas, high-temperature particulate matter, and other emissions rebound and impact a pressure relief structure of an adjacent battery cell, causing damage to the pressure relief structure of the adjacent battery cell. In severe cases, the pressure relief structure of the adjacent battery cell is melted through and high-temperature particulate matter enters. Once the pressure relief structure is melted through by external high-temperature emissions, the high-temperature particulate matter directly falls onto the electrode assembly through the opening on the insulating protection member, causing the separator to melt through and resulting in an internal short circuit of the battery cell, which triggers thermal propagation.

In view of the above problems, this application proposes a battery cell. An insulating protection member of the battery cell is provided with an exhaust structure corresponding to the pressure relief structure. The exhaust structure includes multiple layers of flow guide plates. Each layer of flow guide plate is provided with a flow guide hole. Along a direction from the end cover toward the electrode assembly, flow guide holes of at least two layers of flow guide plates are staggered.

When thermal runaway occurs in the current battery cell, the flow guide holes of the multiple layers of flow guide plates serve the function of conduction, allowing high-temperature smoke, particulate matter, and other emissions inside the current battery cell to reach the pressure relief structure relatively smoothly and be discharged to the outside of the battery cell through the pressure relief structure, so that the battery cell may relieve pressure in a relatively timely manner, thereby reducing the risk caused by thermal runaway of the current battery cell. When thermal runaway occurs in another battery cell adjacent to the current battery cell, and the emissions ejected from the battery cell undergoing thermal runaway affect the pressure relief structure of the current battery cell, the pressure relief structure of the current battery cell melts. Since the flow guide holes of at least two layers of flow guide plates among the multiple layers of flow guide plates are staggered, the molten substance of the pressure relief structure or other high-temperature particulate matter is blocked by a lower flow guide plate after passing through the flow guide holes of an upper flow guide plate, thereby reducing the possibility that the molten substance of the pressure relief structure or other high-temperature particulate matter directly passes through the exhaust structure and falls onto the electrode assembly, causing a short circuit in the current battery cell and further causing thermal runaway of the current battery cell. This reduces the possibility of further propagation of thermal runaway and a possibility of greater danger caused by thermal runaway.

For the convenience of description, in the following embodiments, as an example for description, an electric apparatus in an embodiment of this application is a vehicle 1000.

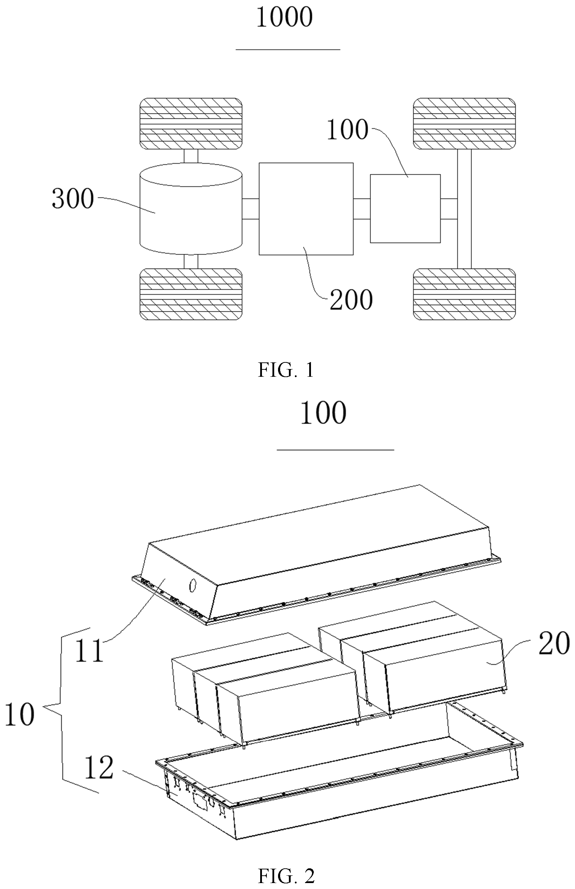

Refer to FIG. 1. FIG. 1 schematically shows a schematic structural diagram of a vehicle provided in some embodiments of this application. The vehicle 1000 may be a fuel-powered vehicle, a gas vehicle, or a new energy vehicle. The new energy vehicle may be a pure electric vehicle, a hybrid vehicle, an extended-range vehicle, or the like. A battery 100 is arranged inside the vehicle 1000, and the battery 100 may be arranged at a bottom, head, or tail of the vehicle 1000. The battery 100 may be used for power supply of the vehicle 1000. For example, the battery 100 may serve as an operating power source of the vehicle 1000. The vehicle 1000 may further include a controller 200 and a motor 300. The controller 200 is used to control the battery 100 to supply power to the motor 300, for example, to satisfy the operating power requirements during starting, navigation, and driving of the vehicle 1000.

In some embodiments of this application, the battery 100 not only serves as an operating power source of the vehicle 1000, but also serves as a driving power source of the vehicle 1000 to completely or partially replace fuel oil or natural gas to provide driving power for the vehicle 1000.

Refer to FIG. 2. FIG. 2 schematically shows a schematic exploded view of a battery provided in some embodiments of this application. The battery 100 includes a case 10 and a battery cell 20. The battery cell 20 is accommodated in the case 10. The case 10 is configured to provide an accommodating space for the battery cell 20, and the case 10 may adopt various structures. In some embodiments, the case 10 may include a first part 11 and a second part 12. The first part 11 and the second part 12 cover each other. The first part 11 and the second part 12 jointly define an accommodating space for accommodating the battery cell 20. The second part 12 may be a hollow structure with one end open, and the first part 11 may be a plate-like structure. The first part 11 covers the open side of the second part 12 so that the first part 11 and the second part 12 jointly define the accommodating space. The first part 11 and the second part 12 may also both be hollow structures with one side open, and the open side of the first part 11 fits the open side of the second part 12. Certainly, the case 10 formed by the first part 11 and the second part 12 may be in various shapes, such as a cylinder or rectangle.

The battery 100 may contain multiple battery cells 20. The multiple battery cells 20 may be connected in series, parallel, or series-parallel. A series-parallel connection means that the multiple battery cells 20 are connected in both series and parallel connections. The multiple battery cells 20 may be directly connected in series, parallel, or series-parallel, and then an entirety formed by the multiple battery cells 20 is accommodated in the case 10. Certainly, the battery 100 may be formed by first connecting multiple battery cells 20 in series, parallel, or series-parallel to form a battery module, and then multiple battery modules are connected in series, parallel, or series-parallel to form an entirety accommodated in the case 10. The battery 100 may further include other structures. For example, the battery 100 may further include a busbar component for achieving electrical connection between the multiple battery cells 20.

Each battery cell 20 may be a secondary battery or a primary battery; it may also be a lithium-sulfur battery, a sodium-ion battery, or a magnesium-ion battery, but is not limited thereto. The battery cell 20 may be cylindrical, flat, rectangular, or the like.

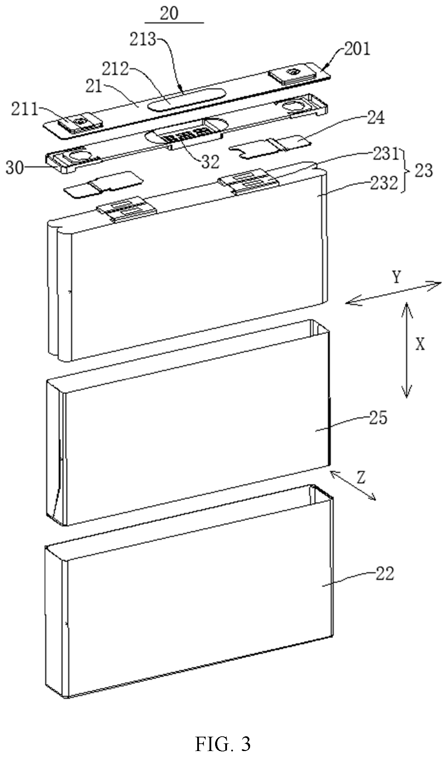

Refer to FIG. 3. FIG. 3 schematically shows a schematic exploded view of a battery cell provided in some embodiments of this application. The battery cell 20 refers to the smallest unit constituting a battery. As shown in FIG. 3, the battery cell 20 includes a housing, an insulating protection member 30, an electrode assembly 23, and other functional components.

The housing may include an end cover 21 and a shell 22. The end cover 21 refers to a component that covers an opening of the shell 22 to isolate the internal environment of the battery cell 20 from the external environment. Without limitation, a shape of the end cover 21 may be adapted to a shape of the shell 22 to fit the shell 22. Optionally, the end cover 21 may be made of a material with certain hardness and strength (such as aluminum alloy). In this way, the end cover 21 is not prone to deformation when subjected to extrusion and collision, so that the battery cell 20 has a higher structural strength and safety performance is improved. Functional components such as an electrode terminal 211 may be provided on the end cover 21. The electrode terminal 211 may be used to electrically connect with the electrode assembly 23 through the connecting piece 24 for outputting or inputting electric energy of the battery cell 20. In some embodiments, the end cover 21 may also be provided with a pressure relief structure 212 for relieving internal pressure when the internal pressure or temperature of the battery cell 20 reaches a threshold. The pressure relief structure 212 may specifically adopt forms such as an explosion-proof valve, an air valve, a pressure relief valve, or a safety valve, and may specifically be a pressure-sensitive or temperature-sensitive element or structure. That is, when the internal pressure or temperature of the battery cell 20 reaches a predetermined threshold, the pressure relief structure 212 performs an action or a weak structure provided in the pressure relief structure 212 is destroyed, thereby forming an opening or channel for relieving the internal pressure of the battery cell 20. The end cover 21 may be made of various materials, such as copper, iron, aluminum, stainless steel, aluminum alloy, or plastic. The embodiments of this application do not impose special limitations on this.

The shell 22 is a component used to cooperate with the end cover 21 to form the internal environment of the battery cell 20, where the formed internal environment may be used to accommodate the electrode assembly 23, the electrolyte, and another component. The shell 22 and the end cover 21 may be independent components. An opening may be provided on the shell 22, and the end cover 21 at the opening covers the opening to form the internal environment of the battery cell 20. Without limitation, the end cover 21 and the shell 22 may alternatively be integrated. Specifically, the end cover 21 and the shell 22 may first form a common connection surface before another component is placed into the shell. When the interior of the shell 22 needs to be encapsulated, the end cover 21 covers the shell 22. The shell 22 may be in various shapes and sizes, such as rectangle, cylinder, or hexagonal prism. Specifically, the shape of the shell 22 may be determined based on the specific shape and size of the electrode assembly 23. The shell 22 may be of various materials, such as copper, iron, aluminum, stainless steel, aluminum alloy, or plastic. The embodiments of this application do not impose special limitations on this. An insulating sheet 25 may be further provided inside the shell 22. The insulating sheet 25 may cover an outer side of the electrode assembly 23 to isolate the electrode assembly 23 from the shell 22.

The electrode assembly 23 is a component in the battery cell 20 where electrochemical reactions occur. The housing may contain one or more electrode assemblies 23. The electrode assembly 23 is mainly formed by winding or stacking a positive electrode sheet and a negative electrode sheet, and a separator is usually provided between the positive electrode sheet and the negative electrode sheet. The electrode assembly 23 includes a main part 232 and a tab 231, where the main part 232 mainly includes portions of the positive electrode sheet and the negative electrode sheet that have active materials, and portions of the positive electrode sheet and the negative electrode sheet that do not have active materials respectively form the tab 231. The positive tab and the negative tab may be located at one end of the main part 232 or respectively located at two ends of the main part 232. During the charge and discharge of the battery, the positive active material and the negative active material react with the electrolyte, and the tab 231 may be connected to an electrode terminal 211 through the connecting piece 24 to form a current loop.

The insulating protection member 30 is a component located between the end cover 21 and the electrode assembly 23. The insulating protection member 30 may be a plastic member. The insulating protection member may be integrally preformed from plastic or assembled from various plastic components, and the material is an insulating material. The insulating protection member may alternatively be a component of another material, such as a rubber member. The insulating protection member 30 mainly implements two functions. First, it may be used to isolate an electrical connection component inside the housing from the end cover 21 to reduce a risk of short circuit. Second, it effectively supports the end face of the electrode assembly 23. Since a jelly roll inside the electrode assembly 23 is slightly compressed after the electrode assembly 23 is assembled into the housing and the end cover 21 is welded, and the electrode assembly 23 is in a vibrating environment during vehicle operation, if the restraint on the electrode assembly 23 is insufficient, a life of the jelly roll is easily affected or a short circuit is caused. Therefore, the insulating protection member needs to effectively support the end face of the jelly roll to reduce the possibility that the electrode assembly 23 moves up and down.

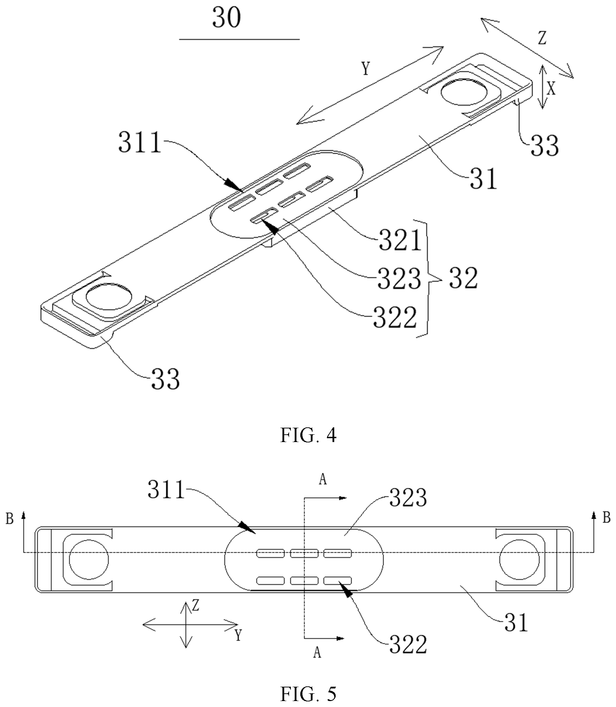

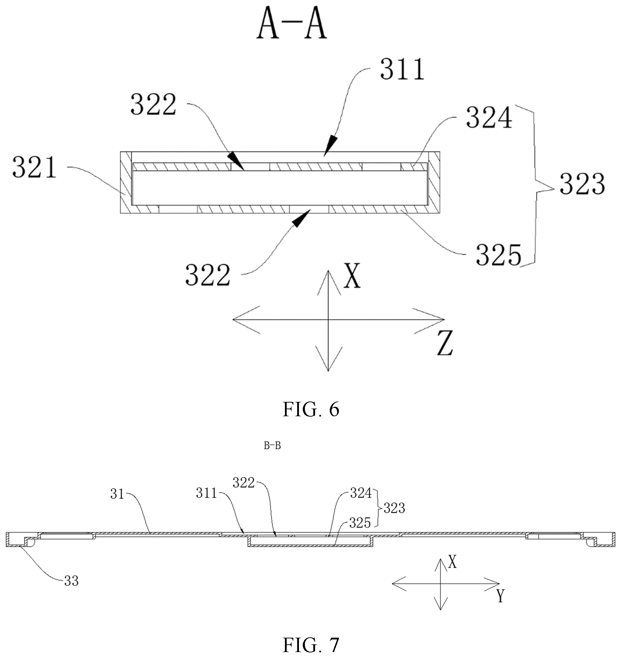

According to some embodiments of this application, with reference to FIG. 3 and further with reference to FIG. 4 to 7, FIG. 4 schematically shows a schematic diagram of an insulating protection member from a perspective in some embodiments of this application, FIG. 5 schematically shows a schematic diagram of the insulating protection member from another perspective in some embodiments of this application, FIG. 6 schematically shows a cross-sectional view along A-A of FIG. 5, and FIG. 7 schematically shows a cross-sectional view along B-B of FIG. 5. This embodiment provides a battery cell 20, including a housing, an electrode assembly 23, and an insulating protection member 30. The housing is provided with a first wall 201. The first wall 201 is provided with a pressure relief structure 212. The electrode assembly 23 is provided in the housing. The insulating protection member 30 is provided on a side of the first wall 201 facing the electrode assembly 23. The insulating protection member 30 is provided with an exhaust structure 32 corresponding to a position of the pressure relief structure 212. The exhaust structure 32 includes multiple layers of flow guide plates 323. Each layer of flow guide plate 323 is provided with a flow guide hole 322. Along a first direction X, the multiple layers of flow guide plates 323 are spaced apart. Projections of the flow guide holes 322 of at least two layers of flow guide plates 323 along the first direction X are at least partially staggered. The first direction X is an arrangement direction of the first wall 201 and the electrode assembly 23.

The first wall 201 may be an end cover 21 or another side wall of the housing.

The insulating protection member 30 may be fastened to the first wall 201 (the first wall 201 in this embodiment may be understood with reference to the end cover 21) and located on a side of the first wall 201 close to the electrode assembly 23. The side of the first wall 201 close to the electrode assembly 23 is an inner side of the first wall 201; and when the battery cell 20 is placed in an upright direction (as shown in FIG. 3, an arrangement state in which the end cover 21 is on top and the shell 22 is at the bottom is upright arrangement), it is a lower side of the first wall 201. For the convenience of description, the following descriptions of the corresponding components are all based on the state in which the battery cell 20 is placed in an upright direction.

The exhaust structure 32 is a part of the insulating protection member 30. The exhaust structure 32 corresponds to a position of the pressure relief structure 212, which may be understood as that the exhaust structure 32 is arranged opposite to the pressure relief structure 212. Specifically, the exhaust structure 32 may be located directly below the pressure relief structure 212. Along the direction from the first wall 201 toward the electrode assembly 23, an orthographic projection of the pressure relief structure 212 onto the insulating protection member 30 may be located in the exhaust structure 32.

The first direction X may also be understood as a direction from the first wall 201 toward the electrode assembly 23. Specifically, in this embodiment, it may be understood with reference to a height direction of the battery cell 20. The flow guide plate 323 may be connected to a body portion of the insulating protection member 30. The multiple layers of flow guide plates 323 are spaced along the first direction X, which may be understood as that the multiple layers of flow guide plates 323 are sequentially stacked and spaced apart along the height direction of the battery cell 20. The multiple layers of flow guide plates 323 may be arranged at an equal interval or at unequal intervals. Gaps between the multiple layers of flow guide plates 323 allow smoke and other emissions to circulate.

The flow guide holes 322 may allow high-temperature smoke and the like generated inside the battery cell 20 to flow to the pressure relief structure 212. The flow guide holes 322 may be structures penetrating a top surface and a bottom surface of the flow guide plate 323 where they are located. The top surface of the flow guide plate 323 is a side facing the first wall 201, and the bottom surface of the flow guide plate 323 is a side facing away from the first wall 201. The flow guide holes 322 communicate with the gaps between corresponding adjacent flow guide plates 323. The flow guide holes 322 on the multiple layers of flow guide plates 323 and the gaps between adjacent flow guide plates 323 enable the exhaust structure 32 to penetrate the top surface and the bottom surface of the insulating protection member 30. When the battery cell 20 undergoes thermal runaway, smoke and other emissions can flow to the pressure relief structure 212 through the flow guide holes 322 and the gaps between adjacent flow guide plates 323.

Multiple layers of flow guide plates 323 refer to two layers of flow guide plates 323 or more layers of flow guide plates 323. The multiple layers of flow guide plates 323 mentioned in this embodiment may be all layers of flow guide plates 323. For example, at least two layers of flow guide plates 323 may be at least two layers among all layers of flow guide plates 323; for another example, the multiple layers of flow guide plates 323 spaced apart along the first direction X may be all layers of flow guide plates 323 spaced apart along the first direction X. Projections of the multiple layers of flow guide plates 323 along the first direction X may substantially overlap, that is, the multiple layers of flow guide plates 323 may be plate or sheet structures with substantially the same shape and size, and the multiple layers of flow guide plates 323 substantially overlap along the first direction X.

The projections of the multiple layers of flow guide plates 323 along the first direction X may be understood as orthographic projections of the multiple layers of flow guide plates 323 along the first direction X onto a same plane, where the plane is substantially perpendicular to the first direction X.

The projections of the flow guide holes 322 of at least two layers of flow guide plates 323 along the first direction X may be understood as the orthographic projections of the flow guide holes 322 of the at least two layers of flow guide plates 323 along the first direction X onto a same plane, where the plane is substantially perpendicular to the first direction X. The projections of the flow guide holes 322 of the at least two layers of flow guide plates 323 along the first direction X being at least partially staggered may be understood as that, among all layers of flow guide plates 323, the flow guide holes 322 on at least two layers of flow guide plates 323 are staggered along the first direction X, where the staggering may be partial staggering or complete staggering. That is, for at least two layers of flow guide plates 323, a projection of a flow guide hole 322 of one layer along the first direction X onto the other layer is staggered from or partially overlaps with a flow guide hole 322 of the other layer. In other words, the flow guide holes 322 of at least two layers of flow guide plates 323 do not completely overlap in the height direction, and the projection of the flow guide hole 322 of one layer along the first direction X is at least partially located outside the projection of the flow guide hole 322 of the other layer along the first direction X. Furthermore, staggering of the projections of the flow guide holes 322 of at least two layers of flow guide plates 323 along the first direction X is complete staggering, that is, the projection of the flow guide holes 322 of one layer along the first direction X onto the other layer is located outside the flow guide hole 322 of the other layer. Specifically, an edge of the projection of the flow guide hole 322 of one layer along the first direction X onto the other layer may be in contact with an edge of the flow guide hole 322 of the other layer, or the projection of the flow guide hole 322 of one layer along the first direction X onto the other layer may be spaced apart from the flow guide hole 322 of the other layer.

It should also be explained that, in two layers of flow guide plates 323, if at least one flow guide hole 322 in one layer does not completely overlap with all flow guide holes 322 in the other layer, it is considered that the projections of the flow guide holes 322 of the two layers of flow guide plates 323 along the first direction X are at least partially staggered. For example, in two layers of flow guide plates 323, if multiple flow guide holes 322 are provided on one or both of the two layers of flow guide plates 323, and one flow guide hole 322 of the multiple flow guide holes 322 in one layer has a projection, onto the other layer, that is at least partially located outside all the flow guide holes 322 of the other layer, it is considered that the projections of the flow guide holes 322 of the two layers of flow guide plates 323 along the first direction X are at least partially staggered.

It is understood that, when the projections of the flow guide holes 322 of at least two layers of flow guide plates 323 along the first direction X are staggered, in the height direction (that is, the first direction X) of the battery cell 20, the flow guide hole 322 of one layer of flow guide plate 323 is blocked by another layer of flow guide plate 323, so that a substance falling from the upper flow guide hole 322 is blocked by the lower flow guide plate 323, thereby reducing the possibility that the molten substance of the pressure relief structure 212 or other high-temperature particulate matter falling from above contacts the electrode assembly 23. When the projections of the flow guide holes 322 of at least two layers of flow guide plates 323 along the first direction X partially overlap (that is, partially staggered), in the height direction (that is, the first direction X) of the battery cell 20, the flow guide holes 322 of one layer of flow guide plate 323 are partially blocked by another layer of flow guide plate 323, so that the substance falling from the upper flow guide hole 322 is less likely to pass through the lower flow guide hole 322. For example, a relatively large substance falling from the upper flow guide hole 322 is blocked by the lower flow guide plate 323. For another example, a substance falling from a region, of the upper flow guide hole 322, blocked by the lower flow guide plate 323 is also blocked by the lower flow guide plate 323, thereby also reducing the possibility that the molten substance of the pressure relief structure 212 or other high-temperature particulate matter falling from above contacts the electrode assembly 23.

In the battery cell 20 of this embodiment, the exhaust structure 32 includes multiple layers of flow guide plates 323 spaced apart. Each layer of flow guide plate 323 is provided with a flow guide hole 322. When thermal runaway occurs in the current battery cell 20, the flow guide hole 322 implements conduction, and then high-temperature smoke, particulate matter, and other emissions inside the current battery cell 20 reach the pressure relief structure 212 relatively smoothly and are discharged to the outside of the battery cell 20 through the pressure relief structure 212, so that the battery cell 20 relieves pressure in a timely manner, thereby reducing the risk caused by thermal runaway of the current battery cell 20. When thermal runaway occurs in another battery cell 20 adjacent to the current battery cell 20, the emissions ejected from the battery cell 20 undergoing thermal runaway may affect a pressure relief structure 212 of the current battery cell 20 and cause the pressure relief structure 212 of the current battery cell 20 to melt. In this case, since the projections of the flow guide holes 322 of at least two layers of flow guide plates 323 among the multiple layers of flow guide plates 323 along the first direction X are at least partially staggered, after the molten substance of the pressure relief structure 212 passes through a flow guide hole 322 of an upper flow guide plate 323, the substance is blocked by a lower flow guide plate 323, thereby reducing the possibility that the molten substance of the pressure relief structure 212 or other high-temperature particulate matter directly passes through the exhaust structure 32 and falls onto the electrode assembly 23, which may cause a short circuit in the current battery cell 20 and further cause thermal runaway of the current battery cell 20. In this way, the possibility of further propagation of thermal runaway is reduced and the possibility of greater danger caused by thermal runaway is reduced.

In some technologies, a protective member 40 (such as a mica sheet) may be added to the pressure relief structure 212 outside the first wall 201 of the battery cell 20. In this way, the high-temperature and high-speed airflow generated after the battery cell 20 loses control may take away a protective member 40 of a surrounding battery cell 20, resulting in protection failure and thermal propagation. However, in the battery cell 20 of this embodiment, the electrode assembly 23 at the position corresponding to the pressure relief structure 212 is protected inside the battery cell 20, which reduces the problem of protection failure of adjacent battery cells 20 caused by the high-temperature and high-speed airflow after one battery cell 20 loses control.

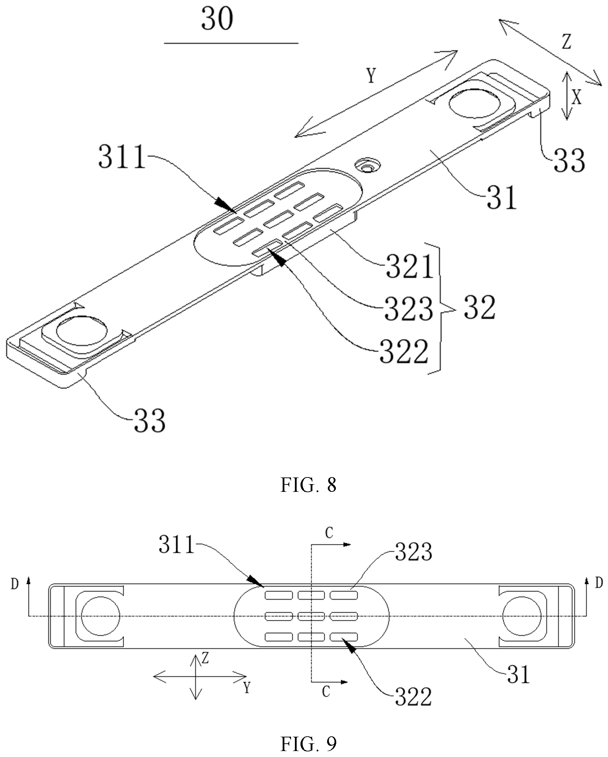

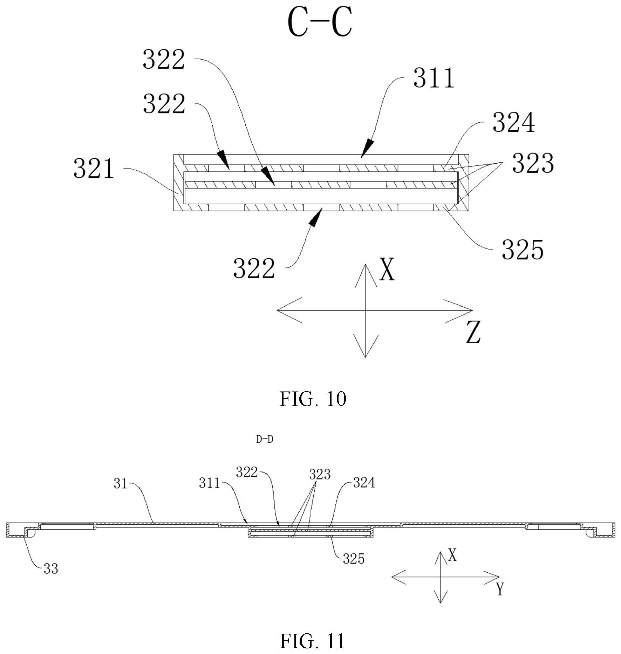

According to some embodiments of this application, optionally, as shown in FIG. 4 to FIG. 7 and with further reference to FIG. 8 to FIG. 11, FIG. 8 schematically shows a schematic diagram of an insulating protection member from a perspective in some embodiments of this application, FIG. 9 schematically shows a schematic diagram of the insulating protection member from another perspective in some embodiments of this application, FIG. 10 schematically shows a cross-sectional view along C-C in FIG. 9, and FIG. 11 schematically shows a cross-sectional view along D-D in FIG. 9. Projections of flow guide holes 322 of any two adjacent layers of flow guide plates 323 among the multiple layers of flow guide plates 323 along the first direction X are at least partially staggered.

The multiple layers of flow guide plates 323 in this embodiment may be three or more layers. It is understood that any two adjacent layers of flow guide plates 323 are two flow guide plates 323 adjacent along the first direction X. The flow guide holes 322 of the multiple layers of flow guide plates 323 may all be staggered along the first direction X, so that projections of the flow guide holes 322 of any two adjacent layers of flow guide plates 323 along the first direction X are at least partially staggered. As shown in FIG. 8 to FIG. 11, the positions of the flow guide holes 322 of the multiple flow guide plates 323 may be arranged in an alternating and cyclic staggered manner along the first direction X. For example, as shown in FIG. 8 to FIG. 11, three layers of flow guide plates 323 are provided, which are sequentially a first-layer flow guide plate, a second-layer flow guide plate, and a third-layer flow guide plate. A flow guide hole 322 of the first-layer flow guide plate and a flow guide hole 322 of the third-layer flow guide plate overlap with each other, while the flow guide hole 322 of the first-layer flow guide plate and a flow guide hole 322 of the second-layer flow guide plate are at least partially staggered. In this way, the second-layer flow guide plate is also at least partially staggered from the flow guide hole 322 of the third-layer flow guide plate. For another example, four layers of flow guide plates 323 are provided. Along the first direction X, they are sequentially a first-layer flow guide plate, a second-layer flow guide plate, a third-layer flow guide plate, and a fourth-layer flow guide plate. A flow guide hole 322 of the first-layer flow guide plate and a flow guide hole 322 of the third-layer flow guide plate overlap with each other, a flow guide hole 322 of the second-layer flow guide plate and a flow guide holes 322 of the fourth-layer flow guide plate overlap with each other, and the flow guide hole 322 of the first-layer flow guide plate and the flow guide hole 322 of the second-layer flow guide plate are at least partially staggered. In this way, the third-layer flow guide plate is also at least partially staggered from the flow guide hole 322 of the fourth-layer flow guide plate, and the second-layer flow guide plate is also at least partially staggered from the flow guide hole 322 of the third-layer flow guide plate.

In this embodiment, by staggering the flow guide holes 322 of any two adjacent layers of flow guide plates 323 along the first direction X, the blocking effect on the molten substance of the pressure relief structure 212 or other high-temperature particulate matter is improved, thereby reducing the possibility that the molten substance of the pressure relief structure 212 or other high-temperature particulate matter directly passes through the exhaust structure 32 and falls onto the electrode assembly 23, which may cause a short circuit in the current battery cell 20 and further cause thermal runaway of the current battery cell 20. In this way, the possibility of further propagation of thermal runaway is reduced and the possibility of greater danger caused by thermal runaway is reduced.

According to some embodiments of this application, optionally, projections of the flow guide holes 322 of any two layers of flow guide plates 323 among the multiple layers of flow guide plates 323 along the first direction X are at least partially staggered.

The multiple layers of flow guide plates 323 in this embodiment may be three or more layers. Projections of flow guide holes 322 of any two layers of flow guide plates 323 along the first direction X are at least partially staggered. That is, along the first direction X, flow guide holes 322 of all the flow guide plates 323 are staggered. In other words, projections of the flow guide holes 322 of all the flow guide plates 323 along the first direction X onto a same plane are all staggered, or only partially overlap.

In this embodiment, by staggering the flow guide holes 322 of all the flow guide plates 323, the molten substance of the pressure relief structure 212 or other high-temperature particulate matter is blocked by multiple lower flow guide plates 323 after falling through a flow guide hole 322 of an uppermost layer. Even after the flow guide plate 323 adjacent to the uppermost flow guide plate 323 is melted, the lower flow guide plate 323 still has a good blocking effect, thereby improving the blocking effect on the molten substance of the pressure relief structure 212 or other high-temperature particulate matter, reducing the possibility that the molten substance of the pressure relief structure 212 or other high-temperature particulate matter directly passes through the exhaust structure 32 and falls onto the electrode assembly 23, which may cause a short circuit in the current battery cell 20 and further cause thermal runaway of the current battery cell 20.

According to some embodiments of this application, optionally, at least one layer of flow guide plates 323 is provided with multiple flow guide holes 322 spaced apart.

"Multiple flow guide holes 322" refers to two or more flow guide holes 322. The flow guide holes 322 may be square holes, circular holes, or holes of other shapes. The multiple flow guide holes 322 may all be holes of one shape or may include holes of various shapes, for example, both circular holes and square holes.

Among the multiple layers of flow guide plates 323, some layers of flow guide plates 323 may be provided with multiple flow guide holes. For example, in three layers of flow guide plates 323, one or two layers of flow guide plates 323 may be provided with multiple flow guide holes. Alternatively, among the multiple layers of flow guide plates 323, each layer of flow guide plate 323 may be provided with multiple flow guide holes 322. In a case that multiple flow guide holes 322 are provided on the flow guide plate 323, and projections of the flow guide holes 322 of two layers of flow guide plates 323 along the first direction X are staggered, all flow guide holes 322 of one flow guide plate 323 may have their projections along the first direction X are spaced apart from projections along the first direction X of all flow guide holes 322 of the other flow guide plate 323. In a case that the projections of flow guide holes 322 of two layers of flow guide plates 323 along the first direction X partially overlap, a projection of any flow guide hole 322 of one flow guide plate 323 along the first direction X may partially overlap with a projection or projections along the first direction X of one or more flow guide holes 322 of the other flow guide plate 323; or projections along the first direction X of some flow guide holes 322 of one flow guide plate 323 may not overlap or may partially overlap with projections along the first direction X of some flow guide holes 322 of the other flow guide plate 323, while the remaining flow guide holes 322 of the one flow guide plate 323 completely overlap with the remaining flow guide holes 322 of the other flow guide plate 323.

In this embodiment, multiple flow guide holes 322 are spaced apart on the flow guide plate 323. In this way, an overall flow area of the flow guide plate 323 is satisfied, which facilitates discharge of the emissions inside the battery cell 20 through the flow guide holes 322 during thermal runaway of the battery cell 20. In addition, the multiple flow guide holes 322 are provided. Compared with one large flow guide hole 322, a single flow guide hole 322 has a smaller flow area, which blocks high-temperature particulate matter with a large particle size. This helps improve the blocking effect on the molten substance of the pressure relief structure 212 or other high-temperature particulate matter, thereby reducing the possibility that the molten substance of the pressure relief structure 212 or other high-temperature particulate matter directly passes through the exhaust structure 32 and falls onto the electrode assembly 23, which may cause a short circuit in the current battery cell 20 and further cause thermal runaway of the current battery cell 20.

According to some embodiments of this application, optionally, as shown in FIG. 4 to FIG. 11, the multiple flow guide holes 322 located on a same layer of flow guide plate 323 are arranged in rows, and each row includes multiple flow guide holes 322 spaced apart along a second direction Y, where the second direction Y intersects with the first direction X.

Multiple flow guide holes 322 located on a same layer of flow guide plate 323 are multiple flow guide holes 322 provided on a same flow guide plate 323. The second direction Y may be a direction substantially perpendicular to the first direction X, and specifically may be a width direction or a length direction of the insulating protection member 30. In this embodiment, as an example for description, the second direction Y is a length direction of the insulating protection member 30.

Multiple flow guide holes 322 in a same row may be arranged at an equal interval or at unequal intervals. Multiple flow guide holes 322 in a same row may have a same size and a same shape.

In this embodiment, the multiple flow guide holes 322 are arranged in rows. In this way, to stagger flow guide holes 322 of different layers of flow guide plates 323, it is only necessary to stagger each row of flow guide holes 322 of adjacent flow guide plates 323, which simplifies the design of the multiple layers of flow guide plates 323.

According to some embodiments of this application, optionally, as shown in FIG. 4 to FIG. 11, multiple flow guide holes 322 located on a same layer of the flow guide plates 323 are arranged in multiple rows along a third direction Z, and two adjacent flow guide holes 322 in adjacent rows are aligned in the third direction Z, where the third direction Z, the second direction Y, and the first direction X intersect with each other.

The third direction Z may be substantially perpendicular to both the first direction X and the second direction Y. In this embodiment, the second direction Y may be understood with reference to the width direction of the insulating protection member 30. Adjacent rows refer to adjacent rows on a same layer of flow guide plates 323.

In a specific implementation, as shown in FIG. 4, FIG. 5, and FIG. 7, each layer of flow guide plate 323 may be provided with two rows of air guide holes. In another specific implementation, as shown in FIG. 8, FIG. 9, and FIG. 11, each layer of flow guide plate 323 may be provided with three rows of air guide holes. Along the third direction Z, multiple rows of flow guide holes 322 on a same flow guide plate 323 may be arranged at an equal interval or unequal intervals.

In this embodiment, each layer of flow guide plate 323 is provided with multiple rows of flow guide holes 322. In this way, an area of the flow guide plate 323 is appropriately utilized, and both a flow area and a support strength of the exhaust structure 32 are ensured.

According to some embodiments of this application, optionally, as shown in FIG. 4 to FIG. 11, the insulating protection member 30 further includes a body 31, and the body 31 is provided with an exhaust port 311. Both the pressure relief structure 212 and the exhaust structure 32 correspond to a position of the exhaust port 311, and the exhaust structure 32 is located on a side of the body 31 facing away from the pressure relief structure 212.

The body 31 and the exhaust structure 32 of the insulating protection member 30 may be integrated, specifically, an injection-molded integral structure, or a structure formed through connection by means of pasting or the like. The body 31 and the exhaust structure 32 may be made of a same material, and both may be made of an insulating material, and specifically, may be plastic members.

A side of the body 31 facing the first wall 201 (in this embodiment, it may be understood with reference to the top surface of the end cover 21) may be connected to the first wall 201. The exhaust port 311 on the body 31 may penetrate through the side of the body 31 facing the first wall 201 and a side of the body 31 facing away from the first wall 201. That is, the exhaust port 311 may penetrate through the top surface and the bottom surface of the body 31. The exhaust structure 32 and the pressure relief structure 212 separately correspond to the position of the exhaust port 311 and are separately arranged on two sides of the exhaust port 311, and the two are opposite to each other through the exhaust port 311. Since the first wall 201 is arranged on the top surface side of the insulating protection member 30, the pressure relief structure 212 on the first wall 201 is arranged on the top surface side of the body 31 (the side facing the end cover 21), and correspondingly, the exhaust structure 32 is arranged on the bottom surface side of the body 31 (the side facing away from the end cover 21). Specifically, the exhaust structure 32 may be arranged directly below the exhaust port 311, and the pressure relief structure 212 may cover the exhaust port 311 directly from above.

It is understood that the pressure relief structure 212 and the exhaust structure 32 are provided opposite to each other through the exhaust port 311, so that the exhaust structure 32 and the pressure relief structure 212 are spaced apart. In this way, smoke and other emissions inside the battery cell 20 relatively smoothly flow to the pressure relief structure 212 after passing through the exhaust structure 32. This enhances responsiveness of opening the pressure relief structure 212 and reduces the possibility that the battery cell 20 cannot relieve pressure in a timely manner, which may pose a risk of more severe thermal runaway.

According to some embodiments of this application, optionally, with continued reference to FIG. 4 to FIG. 11, the exhaust structure 32 further includes a support wall 321. One end of the support wall 321 is connected to the body 31, another end of the support wall 321 protrudes toward a side of the body 31 facing away from the first wall 201, and the flow guide plate 323 is connected to the support wall 321.

An upper end of the support wall 321 may be connected to the body 31. The support wall 321 and the body 31 may be integrated, and the support wall 321 and the flow guide plate 323 may be integrated. The support wall 321, the flow guide plate 323, and the body 31 may be made of a same material, for example, may be plastic members of a same material.

The support wall 321 may be disposed around a periphery of the flow guide plates 323 and connected to a peripheral edge of the flow guide plates 323. That is, the support wall 321 is arranged in an annular shape, and the flow guide plates 323 are connected to an inner wall of the support wall 321. The support wall 321 may alternatively be arranged at a part of the periphery of the flow guide plates 323. For example, the support wall 321 may be arranged only at two opposite ends of the flow guide plates 323. It should be noted that a bottommost flow guide plate 323 (that is, a flow guide plate 323 closest to the first wall 201, which may be understood with reference to the second flow guide plate 325) may be connected to a bottom end of the support wall 321, and a topmost flow guide plate 323 (that is, a flow guide plate 323 farthest from the first wall 201 or a flow guide plate 323 that abuts against the electrode assembly 23, which may be understood with reference to the first flow guide plate 324) may be connected to a top end of the support wall 321.

In this embodiment, the support wall 321 is provided, and the support wall 321 protrudes relative to the body 31, providing space along the first direction X for the arrangement of the multiple layers of flow guide plates 323, which facilitates the spaced arrangement of the multiple layers of flow guide plates 323. Further, this helps the bottommost flow guide plate 323 abut against the electrode assembly 23, which helps enhance support provided by the insulating protection member 30 to the electrode assembly 23 and reduce the possibility that the electrode assembly 23 vibrates or shakes in the housing, so that the electrode assembly 23 is more stable in the housing.

According to some embodiments of this application, optionally, the exhaust structure 32 and the body 31 are integrated.

The body 31 and the exhaust structure 32 may be integrally formed by injection molding, or may be connected with each other by bonding, welding, or the like. Specifically, both the body 31 and the support wall 321 may be integrated, and the support wall 321 and the flow guide plates 323 may be integrated.

The exhaust structure 32 and the body 31 are configured as an integral structure, so that better connection stability is achieved between the exhaust structure 32 and the body 31.

According to some embodiments of this application, optionally, the insulating protection member 30 is a plastic member.

According to some embodiments of this application, optionally, as shown in FIG. 3, the housing includes a shell 22 and an end cover 21. The shell 22 has an opening. The end cover 21 covers the opening. The first wall 201 is the end cover 21.

According to some embodiments of this application, optionally, along the first direction X, a flow guide plate 323 closest to the pressure relief structure 212 is spaced apart from the first wall 201; and/or along the first direction X, a flow guide plate 323 farthest from the first wall 201 abuts against the electrode assembly 23.

The flow guide plate 323 closest to the first wall 201, that is, the topmost flow guide plate 323 among all the flow guide plates 323, is defined as a first flow guide plate 324 for the convenience of description. The first flow guide plate 324 is spaced apart from the first wall 201. In this case, there is a gap between the pressure relief structure 212 and the exhaust structure 32. When the pressure relief structure 212 melts, it is less likely to block a flow guide hole 322 on the first flow guide plate 324, so that smoke and other emissions inside the battery cell 20 may relatively smoothly flow out through the exhaust structure 32. This enhances responsiveness of pressure relief in the battery cell 20 and reduces the possibility that the battery cell 20 poses a risk of more severe thermal runaway.

The flow guide plate 323 farthest from the first wall 201, that is, the bottommost flow guide plate 323 among all the flow guide plates 323, is defined as a second flow guide plate 325 for the convenience of description. The second flow guide plate 325 may abut against the top surface of the main part 232 of the electrode assembly 23 to limit the movement of the electrode assembly 23 along the first direction X, enhance support provided by the insulating protection member 30 to the electrode assembly 23, and reduce the possibility that the electrode assembly 23 vibrates or shakes in the housing, so that the electrode assembly 23 is relatively stable in the housing.

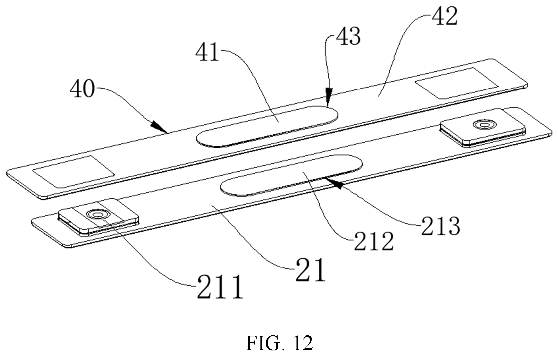

According to some embodiments of this application, optionally, as shown in FIG. 12, FIG. 12 schematically shows a schematic exploded view of an end cover and a protective member in some embodiments of this application. A protective member 40 is provided on a side of the first wall (which may be understood with reference to the end cover 21) facing away from the battery cell 20. The protective member 40 is provided with a shielding portion 41 corresponding to the position of the pressure relief structure 212, and the shielding portion 41 covers the pressure relief structure 212.

The protective member 40 may be an insulating and high-temperature-resistant protective member 40 such as a mica sheet. The arrangement of the shielding portion 41 should not affect the normal opening and pressure relief of the pressure relief structure 212 when the battery cell 20 undergoes thermal runaway. Specifically, in an implementation, the protective member 40 may further include a connecting portion 42, a weakened portion 43, and a shielding portion 41. The connecting portion 42 is connected to the first wall 201, specifically by adhesive bonding. The weakened portion 43 is connected between the connecting portion 42 and the shielding portion 41. A strength of the weakened portion 43 is less than a strength of the shielding portion 41 and a strength of the connecting portion 42. In this way, the weakened portion 43 breaks when the pressure relief structure 212 is opened, thereby disconnecting the connection between the connecting portion 42 and the shielding portion 41. In the protective member 40, the strength of the weakened portion 43 is reduced by a structure such as opening, groove, or score. Certainly, the weakened portion 43 may also be made of a low-strength material.

The protective member 40 may provide protection from the outside of the first wall 201, that is, the end cover 21. When thermal runaway occurs in another battery cell 20 adjacent to the current battery cell 20, the emissions ejected from the battery cell 20 undergoing thermal runaway are blocked by the protective member 40, which reduces the influence of the emissions from the another battery cell 20 on the pressure relief structure 212, so that the possibility of further propagation of thermal runaway is reduced and the possibility of greater danger caused by thermal runaway is reduced. In this embodiment, based on the exhaust structure 32 of this application or any embodiment of this application, a protective member 40 may be further provided. In this way, the exhaust structure 32 on the inner side of the first wall 201 and the protective member 40 on the outer side of the first wall 201 form multi-level protection inside and outside the battery cell 20, further reducing the possibility of thermal runaway propagation and the possibility of greater danger caused by thermal runaway.

According to some embodiments of this application, optionally, a total flow area of all flow guide holes 322 on each layer of flow guide plate 323 is 0.5 times to 1.2 times a pressure relief area of the pressure relief structure 212.

The pressure relief area of the pressure relief structure 212 is an area of a pressure relief region 213 that is formed for discharge of the emissions inside the battery cell 20 when the pressure relief structure 212 is opened. The pressure relief region 213 is a region of the first wall 201 corresponding to the pressure relief structure 212, that is, a region in which the first wall 201 can be opened by the pressure relief structure 212 to communicate with the outside of the housing. The pressure relief structure 212 is arranged in the pressure relief region 213. In a natural state, the pressure relief structure 212 seals the pressure relief region 213. When the battery cell 20 undergoes thermal runaway, the pressure relief structure 212 may open the pressure relief region 213. The area of the pressure relief region 213 is an area of the pressure relief region 213 in a plane where the first wall 201 is located and does not involve a dimension of the pressure relief region 213 in the thickness direction of the first wall 201.

The total flow area of all the flow guide holes 322 on each layer of flow guide plate 323 is a sum of the flow areas of all the flow guide holes 322 on one layer of flow guide plate 323. A flow area of the flow guide hole 322 may be understood with reference to an area of a flow cross-section of the flow guide hole 322. A flow cross-section of the flow guide hole 322 is a cross-section perpendicular to an axial direction of the flow guide holes 322, that is, a cross-section perpendicular to a flow direction of emissions in the flow guide holes 322, which may be specifically understood with reference to a cross-section perpendicular to the first direction X.

Specifically, the total flow area of all the flow guide holes 322 on each layer of flow guide plate 323 may be 0.5 times, 0.6 times, 0.7 times, 0.8 times, 0.9 times, 1 time, 1.2 times, or the like the pressure relief area of the pressure relief structure 212.

It should be noted that a shape of the exhaust structure 32 may be similar to or the same as that of the pressure relief region 213 of the pressure relief structure 212. For example, the pressure relief region 213 may be a structure in a running track shape with a rectangle in the middle and semicircles connected to both ends of the rectangle. The pressure relief structure 212 is also formed in a generally racetrack-shaped contour. The flow guide plate 323 of the exhaust structure 32 may also be a structure in a running track shape.

For setting of the total flow area of the flow guide holes 322 of each layer of flow guide plate 323 in this embodiment, both the strength and the flow area of the flow guide plate 323 are considered, so that the insulating protection member 30 provides good support to the battery cell 20, and the emissions inside the battery cell 20 flow to the pressure relief structure 212 in a relatively timely manner.

Some embodiments of this application further provide a battery 100, including the battery cell 20 provided in this application or any embodiment of this application.

Some embodiments of this application further provide an electric apparatus, including the battery 100 in any of the above solutions, and the battery 100 is configured to provide electric energy for the electric apparatus.

The electric apparatus may be any device or system that uses the battery 100 as described above.

According to some embodiments of this application, as shown in FIG. 3 to FIG. 11, these embodiments provide a battery cell 20, including a shell 22, an end cover 21, an electrode assembly 23, and an insulating protection member 30. The shell 22 is provided with an opening. The end cover 21 covers the opening. The end cover 21 is provided with a pressure relief structure 212. The electrode assembly 23 is provided in the shell 22. The insulating protection member 30 is provided on a side of the end cover 21 facing the electrode assembly 23. The insulating protection member 30 is provided with an exhaust structure 32 corresponding to a position of the pressure relief structure 212. The exhaust structure 32 includes multiple layers of flow guide plates 323. Each layer of flow guide plate 323 is provided with a flow guide hole 322. Along a first direction X, the multiple layers of flow guide plates 323 are spaced apart. Projections of flow guide holes 322 of any two layers of flow guide plates 323 among the multiple layers of flow guide plates 323 along the first direction X are staggered or partially overlap. The first direction X is a direction from the end cover 21 toward the electrode assembly 23. Each layer of flow guide plate 323 is provided with multiple flow guide holes 322, and the multiple flow guide holes 322 of each layer of flow guide plate 323 form multiple rows along the first direction X. Each row includes multiple flow guide holes 322 spaced apart along a second direction Y. A third direction Z, the second direction Y, and the first direction X are perpendicular to each other. The insulating protection member 30 further includes a body 31. The body 31 is provided with an exhaust port 311. The pressure relief structure 212 and the exhaust structure 32 are provided opposite to each other through the exhaust port 311 and may be respectively located on two opposite sides of the body 31. The exhaust structure 32 further includes a support wall 321. One end of the support wall 321 is connected to the body 31, and another end of the support wall 321 protrudes toward a side of the body 31 facing away from the end cover 21. The flow guide plates 323 are connected to the support wall 321. The support wall 321, the body 31, and the multiple layers of flow guide plates 323 are integrated and are all plastic members. Along the first direction X, a flow guide plate 323 closest to the pressure relief structure 212 (a first flow guide plate 324) is spaced apart from the end cover 21. Along the first direction X, the flow guide plate 323 farthest from the end cover 21 (second flow guide plate 325) abuts against the electrode assembly 23.

The two opposite ends of the body 31 may also be provided with a protruding portion 33. The protruding portion 33 is located on a side connected to the body 31 facing the electrode assembly 23, that is, a lower side of the body 31. The protruding portion 33 abuts against the electrode assembly 23, and the protruding portion 33 is spaced apart from the exhaust structure 32. The protruding portion 33 may be provided at two ends of the body 31 along a length direction (refer to the second direction Y of this application) and extend along a width direction of the body 31. The protruding portion 33 may support the body 31 and abut against the electrode assembly 23 to enhance the fastening of the electrode assembly 23 and reduce a possibility that the electrode assembly 23 vibrates or shakes in the housing. The protruding portion 33 may be a hollow structure with an open top surface. The protruding portion 33 and the body 31 may be made of a same material and may be integrated with the body 31.

The above descriptions of the various embodiments tend to emphasize the differences between the various embodiments. The same or similar points may be referred to each other. For brevity, the details are not repeated herein.

Finally, it should be noted that the above embodiments are only used to illustrate the technical solutions of this application and are not intended to limit this application. Although this application has been described in detail with reference to the foregoing embodiments, those of ordinary skill in the art should understand that they can still modify the technical solutions recorded in the foregoing embodiments or equivalently replace some or all of the technical features therein. However, these modifications or replacements do not cause the essence of the corresponding technical solutions to deviate from the scope of the technical solutions of the embodiments of this application, and they should all be covered by the scope of the claims and the description of this application. In particular, as long as there is no structural conflict, the technical features mentioned in the various embodiments may be combined in any manner. This application is not limited to the specific embodiments disclosed herein, but includes all technical solutions falling within the scope of the claims.

## Claims

1. A battery cell, comprising:
a housing, comprising a first wall, wherein the first wall is provided with a pressure relief structure;
an electrode assembly, provided in the housing; and
an insulating protection member, provided on a side of the first wall facing the electrode assembly, wherein the insulating protection member is provided with an exhaust structure corresponding to a position of the pressure relief structure, the exhaust structure comprises multiple layers of flow guide plates, each layer of flow guide plate is provided with a flow guide hole, the multiple layers of flow guide plates are spaced apart along a first direction, projections of flow guide holes of at least two layers of flow guide plates are at least partially staggered along the first direction, and the first direction is an arrangement direction of the first wall and the electrode assembly.

2. The battery cell according to claim 1, wherein projections of flow guide holes of any two adjacent layers of flow guide plates among the multiple layers of flow guide plates along the first direction are at least partially staggered.

3. The battery cell according to claim 2, wherein projections of flow guide holes of any two layers of flow guide plates among the multiple layers of flow guide plates along the first direction are at least partially staggered.

4. The battery cell according to any one of claims 1 to 3, wherein at least one layer of flow guide plate is provided with multiple flow guide holes spaced apart.

5. The battery cell according to claim 4, wherein the multiple flow guide holes located on a same layer of flow guide plate are arranged in rows, and each row comprises multiple flow guide holes spaced apart along a second direction, wherein the second direction intersects with the first direction.

6. The battery cell according to claim 5, wherein multiple flow guide holes located on a same layer of flow guide plate are arranged in multiple rows along a third direction, and two adjacent flow guide holes in adjacent rows are aligned in the third direction, wherein the third direction, the second direction, and the first direction intersect with each other.

7. The battery cell according to any one of claims 1 to 6, wherein the insulating protection member further comprises a body , the body is provided with an exhaust port, both the pressure relief structure and the exhaust structure correspond to a position of the exhaust port, and the exhaust structure is provided on a side of the body facing away from the pressure relief structure.

8. The battery cell according to claim 7, wherein the exhaust structure further comprises a support wall, one end of the support wall is connected to the body, another end of the support wall protrudes toward a side of the body facing away from the first wall, and the flow guide plates are connected to the support wall.

9. The battery cell according to claim 7 or 8, wherein the exhaust structure and the body are integrated.

10. The battery cell according to any one of claims 1 to 9, wherein the housing comprises a shell and an end cover, the shell is provided with an opening, the end cover covers the opening, and the first wall is the end cover.

11. The battery cell according to any one of claims 1 to 10, wherein along the first direction, a flow guide plate closest to the pressure relief structure is spaced apart from the first wall;
and/or along the first direction, a flow guide plate farthest from the first wall abuts against the electrode assembly.

12. The battery cell according to any one of claims 1 to 11, wherein a side of the first wall facing away from the battery cell is provided with a protective member, the protective member is provided with a shielding portion corresponding to the position of the pressure relief structure, and the shielding portion covers the pressure relief structure.

13. The battery cell according to any one of claims 1 to 12, wherein a total flow area of all flow guide holes on each layer of flow guide plate is 0.5 times to 1.2 times a pressure relief area of the pressure relief structure.

14. A battery, comprising the battery cell according to any one of claims 1 to 13.

15. An electric apparatus, comprising the battery according to claim 14, wherein the battery is configured to provide electric energy.
